# EUROPEAN PATENT APPLICATION

(11) **EP 1 306 402 A1**
(43) Date of publication of application: **02.05.2003**
(21) Application number: 01870227.4
(22) Date of filing: 24.10.2001
(51) Int. Cl.: C08H 5/00, C02F 1/52, A23L 2/80, C12H 1/04

(54) **Immobilised polyphenols such as tannin, intermediates for their production and processes for obtaining the same**

(71) Applicant: Omnichem S.A., 1348 Louvain-La Neuve (BE)
(72) Inventor: Van Brussel, Willy, 9230 Wetteren (BE); Jacobs, Pierre Auguste, 1755 Gooik (BE); Schelkens, Geert, 9230 Wetteren (BE); De Pauw, Christiaan Marcel Hilaire, 9630 Zwalm (BE); Ricquier, Patrick, 8400 Oostende (BE)
(74) Representative: Van Malderen, Joelle

(57) **Abstract**

The present invention is related to a particulate insoluble product containing a polyphenol such as tannins that is covalently bound to a polymeric backbone by means of a bifunctional spacer, of which one functionality may react with said polyphenol, and the other is a silicium based group, such as to form an immobilised polyphenol.

The product thus obtained can be used as a complexating agent for metals and proteins, as an antioxidant, as a radical scavenger or as an antibacterial.

## Description

### Field of the invention

Tannins are known to possess complexating properties towards metals and proteins. Immobilisation of reagents offers a number of advantages such as ease of operation, prevention of residues and recovery.

The present invention is related to insoluble products containing polyphenols such as tannin that is covalently bound to a polymeric backbone. These products are obtained by means of a bifunctional spacer, of which one functionality may react with tannin, and the other is a silicium based group. This silicium based group may further react to obtain a product immobilised on a solid support with inorganic oxides such as silica, or a silicone polymer, or can be immobilised by sol gel polymerisation.

The immobilised polyphenols thus obtained shows excellent complexating properties both with proteins and with metals, and can be used for applications such as clarification and stabilisation of beverages, treatment of textiles, removal of metals from solutions, separation and purification of proteins, or as antioxidants.

### Background of the invention

Polyphenols such as tannin are substances that are already used for the tanning of leather. The activity of these products origins from the complexating properties of the phenolic hydroxyl groups, which can complexate both proteins and metals. Many applications of tannin, such as beer stabilisation, result from these properties. Tannins may also be used as an antioxidant, as a textile protector, as an antibacterial agent or in other applications described in literature.

Immobilisation of polyphenols, such as tannin, offers a number of advantages for commercially interesting applications. Such immobilised products allow removal of proteins and metals by a simple filtration, and avoids residues in the treated solutions, such as beverages of any kind. Another advantage is that immobilised tannin may keep its properties after a first use, and may be recycled, possibly after regeneration of the product. Moreover, immobilised tannin is expected to give fast filtrations.

A number of attempts has been made in the past to immobilise tannins by covalent binding to obtain a polymeric material. Most attempts described in the literature are variations of the phenol-formaldehyde polymerisation. For example, in US 4,500,554, this polymerisation is described. This method has the disadvantage that it uses the toxic formaldehyde, which is incompatible with food or pharmaceutical applications, and that the resin thus obtained shows a low porosity.

Tannin has been grafted on polymers such as polyethylene by irradiation of the polymer (Kim et al. J. Appl. Polym. Sci., 39, 855-863 (1990)). Other approaches using polymers are found in US 4,435,529, where compositions based on polyethers and polyurethanes were used. However, these polymers lack porosity and are not mechanically stable to industrial handling.

In the patent by Chibata (US 4,090,919), tannin is immobilised on a polysaccharide derivatised by consecutive reactions with epichlorohydrin, a bisamine, and epichlorohydrin. A covalently bound product is obtained. However, the use of the carcinogenic epichlorohydrin and the highly complex synthesis renders the product commercially uninteresting.

Immobilisation on inorganic oxide has been described in a number of patents. In US 4,500,554, tannic acid is reacted with aminopropyltriethoxysilane and immobilised onto silica using chemicals such as sodium periodate and formaldehyde. This approach uses toxic reagents, and leads to products which are not always covalently bound to the polymeric backbone.

In WO 97/20216, a method is described using silane modified inorganic oxide supports. In this approach, a covalently bound polyphenol may be obtained. The synthesis of this product should be performed with dry silica, in an aprotic solvent, results in the release of hydrogen during the reaction, and may not lead to covalently bound material.

An improved version of the immobilisation can be found in patent publication WO 98/00455. In this paper, the tannin is cross-linked with the epoxide groups of a diglycidyl ether, and adsorbed onto silica. Again, this product lacks the covalent bonding and is synthesised at over 100°C which is an important disadvantage due to the instability of tannin at these temperatures.

Main disadvantages of those known processes of immobilisation are either the use of chemicals that are hazardous, such as formaldehyde, epichlorohydrin or peroxodisulphate, and thus incompatible with food applications, either the fact that non covalently bound compounds are obtained which can lead to leaching into the solutions during the application or the fact that high reaction temperatures can lead to a reduced activity of the tannin molecules. Most polymeric carriers used beside inorganic oxides lack porosity, a high specific surface area or the mechanical strength of inorganic oxides.

### Aims of the invention

The present invention aims to avoid drawbacks of the state of the art and particularly to provide covalent binding of the polyphenols.

It is our aim to provide an immobilised phenolic compound which is covalently bound, synthesised by a simple method using non-toxic reagents, and leading to a mechanically stable product with a high activity.

### Summary of the invention

The present invention overcomes those disadvantages of the state of the art and relates to the immobilisation of polyphenols such as tannin as a polymer to obtain products that are covalently bound and insoluble during further applications and consequently provides the activities of tannin known in the literature combined with the advantages of insoluble products. A covalent bond is a bond between two atoms in which the electrons are shared between the atoms. The polymer backbone is preferentially silica, alumina, titanium oxide or a silicium containing polymer. Most preferably the polymer backbone is silica.

The immobilisation is realised by the use of a bifunctional spacer of which one side reacts with the phenolic groups present on polyphenols such as tannin under basic conditions, and the other side is a silicium derived group that reacts under acidic conditions with a properly chosen insoluble species or may polymerise as such. The immobilised polyphenol may be used for example as a product complexating metals or proteins, as an antioxidant, a radical scavenger or an antibacterial.

The polyphenol such as tannin could also be fixed onto textile, leading to fibers which are protected against discoloration or staining for a much longer time than is the case now.

### Detailed description of the invention

The invention provides insoluble products containing polyphenols such as tannins that are covalently bound to a polymeric backbone. These products are used either in a pure form or in a formulation with other products. To obtain these immobilised products, a bifunctional spacer is used, of which one functionality or group is capable of reacting with a polyphenol as tannin, and another functionality is a reactive silicium based group that effects the polymerisation either by selfcondensation, or by reaction with a properly selected insoluble carrier.

The insoluble products, containing polyphenols, that are covalently bound to a polymeric backbone respond to formula I

BB - SP - Tan Formula I

wherein:
- BB is a polymeric backbone that is an insoluble species,
- Tan is the rest of a tannin bound by one of its hydroxyl group to SP, and
- SP is a group derived from a bifunctional spacer molecule corresponding to the following general formula II 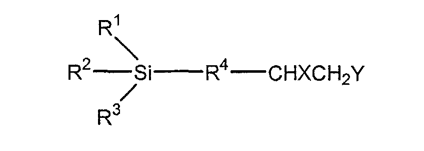
wherein
- R¹, R² are identical or different and represent an alkyl group with 1-8 carbon atoms, preferably methyl, ethyl or isopropyl, an aryl group, an alkoxy group with 1-8 carbon atoms, preferably methoxy, ethoxy or isopropoxy, or an aryloxy group or an halogen;
- R³ is a hydrogen, an alkyl group with 1-8 carbon atoms, preferably methyl, ethyl or isopropyl, an aryl group, an alkoxy group with 1-8 carbon atoms alignment, preferably methoxy, ethoxy or isopropoxy, an aryloxy group or a halogen. Preferably, the R¹R²R³-silicium group is trimethoxysilyl or triethoxysilyl group, a dimethyl-silylhydride or a dimethylsilylchloride.
- R⁴ is an alkyl chain or an alkylcycloalkyl chain containing 0-10 carbon atoms, or an ether chain containing 0-9 carbon atoms around the oxygen, and
- CHXCH₂Y is any group that can react with the phenolic group of the tannin, and preferably may be a vinyl group with X,Y = carbon-carbon double bond, an epoxide with X,Y = O, or X and/or Y can be a leaving group such as a halogenide, a sulfonyl ester such as a mesylate or a tosylate, or it can be an isocyanate.

In such product, Tan stands for phenolic compounds possessing at least two phenolic hydroxyl groups, for hydrolysable tannins *and* for condensed tannins.

Phenolic compounds possessing at least two phenolic hydroxyl groups are for example catechol, resorcinol, hydroquinone, pyrogallol, gallic acid, ellagic acid and their derivatives. By immobilising these products onto a polymeric BB as defined below, the BB can be considered to play the central nucleus as in hydrolysable tannins, resulting in higher activities than for the corresponding phenolic monomers.

Preferably, Tan stands for hydrolysable or condensed tannins as found in nature. Condensed tannin is a product category composed of flavonoids, flavanols, stilbene derivatives and the like. Both hydrolysable and condensed tannins are well described in the standard work " Chemistry of vegetable tannins" by E. Haslam, Ed. Academic Press, London, 1996.

The active part of the insoluble product, is in general a plant extract composed of polyphenolic material or a synthetic polyphenolic material.

Hydrolysable, naturally occurring tannins all contain gallic acid or ellagic acid or a mixture of these two. Tannins composed of gallic acid are for example gallic acid, the dimeric ester digallic acid, and higher oligomers. Tannins may also consist of gallic or ellagic acid esterified on glucose, on glycerol, on quinic acid, on a carbohydrate or sugar. Condensed tannins may also serve as nucleus on which gallic acid is esterified. These condensed tannins are described further in the text. Other derivatives found in nature include esters and ethers of gallic acid or ellagic acid with simple alcohols such as methanol or ethanol. These also combine to more complex structures, in the same way as described above.

If there is a central nucleus present, this nucleus mostly is a glucose, such as in Chinese gall nuts and in Aleppo nuts, or quinic acid, as in Tara tannin.

Hydrolysable tannins are typically obtained by extraction of plant materials such as Chinese gall nuts, Bengal Kino, Aleppo nuts, Sumach tannin, Turkish tannin, Tara tannin, Acer tannin. Hydrolysable tannins are present in all plants, and may also be extracted from other plant sources. The above mentioned extracts differ from each other in the origin of the central part, in the relative abundance of the composing parts of the product mixture, and in the molecular weight distribution.

Most natural product extracts consist of complex mixtures containing several of the above described molecules.

The tannins described above may be chemically modified with simple molecules such as acids or alcohols to enhance or change the properties of the material. Esters of tannin with cinnamic acid and similar aromatic acids find application as UV-protectors, antioxidants or radical scavengers. The immobilisation of these tannin esters will lead to a new class of UV-absorbers with all the advantages insoluble product offers.

Condensed tannins are composed of phenolic derivatives that are part of a larger structure, and which cannot be hydrolysed, as the phenolic ring is bond by at least one carbon-carbon bond or an ether linkage. Typical product categories here are flavonoids, flavanols and stilbene derivatives.

Condensed tannins may be extracted from heartwood or bark of trees, such as Eucalyptus or Acacia species. They may also be synthetically prepared by coupling reactions between phenolic compounds.

Examples of extracts containing condensed tannins include Quebracho tannin from a tree, or from other plant sources, such as Persimmon or Kaki tannin, often used for the clarification of sake.

Gallic acid itself can be obtained either by extraction and hydrolysis of the ester bonds with glucosides or quinic acids, or by synthesis. The use of gallic acid itself may lead to an easily definable product. Ellagic acid may be isolated from natural sources or may be obtained by oxidative dimerisation of a gallic acid containing solution.

Combinations of tannins with different properties may also be used to improve the performance of the products.

Preferably, the tannin used is a plant extract either hydrolysable or condensed. Some natural tannins, may preferably be used such as the extracts, known under this following trade names, including Brewtan®, TANAL, TANEX, FLOCTAN, TEXTAN and BIOGRADE.

A spacer according to the invention is, generally an organic chain, with a silicium derivative on one side of the chain, and a reactive functionality on the other side of the chain. The spacer is used to bind tannins covalently to a solid support (carrier), and to create a distance between the active tannins and the carrier in order to improve the activity of the tannin.

The spacer, if containing a stereocenter, may be used as a racemate or in its enantiomeric form.

For the production of the compound of Formula I, generally the spacer of formula II can be reacted with a polyphenol such as tannin in order to obtain a particulate SP*-Tan derivative comprising a tannin covalently bound to a monofunctional spacer rest. These products can be regarded as intermediate products and can thus be converted to immobilised products.

Preferably, the particulate SP*-Tan product is obtained from a spacer molecule wherein R¹, R² and R³ represent a trialkoxy group and X, Y represent an halogenide, a sulphonate, an isocyanate, or an epoxide group.

Most preferably the spacer molecule is glycidoxypropyltrimethoxysilane or glycidoxypropyltriethoxysilane. These products are available from Sivento under the trade names Dynasylan GLYMO® and Dynasylan GLYEO®.

The invention also relates to process for obtaining said immobilised products.

In these processes, the spacer molecule may be immobilised either by condensation of the silicium groups of the spacer itself, or by reaction of this functionality with inorganic oxides or a monomer of these inorganic oxides, or by reaction with polymers containing silicium groups, or by application of SP*-Tan itself onto a surface.

The sequence of reactions of the spacer molecule may be any sequence possible, as all syntheses lead to different materials with interesting differences in properties. Thus, tannin may be reacted first with the spacer molecule, and then polymerised, or tannin may be reacted with polymeric material to which the rest of a spacer molecule is already attached. The silyl group e.g. can be polymerised by heat or in acidic medium.

Generally the spacer or the SP*-Tan derivative is coupled with an inorganic oxide which is capable of having hydroxyl groups on its surface, or on which it is possible to generate hydroxyl groups by etching. Examples of such inorganic oxides are silica, alumina, titanium oxide, zirconium oxide, silica aluminates, aluminosilicates, clays, acid-treated clays, alkaline earth silicates, all containing groups on which the spacer can be covalently bound. The carrier material may also be calcinated prior to use to enhance its activity. An asset of inorganic oxides is their mechanical stability, useful when the product is recycled or intensively manipulated. Another asset is their relatively high specific surface, which will lead to highly active product.

Preferably, the inorganic oxide is silica. Any silica may be used for this purpose. The silica may be prepared as a hydrogel, a xerogel or another precipitated or crystallised form of silica or regular silica such as MCM-41 or MCM-48 or the like.

The silica can be defined based on physical and chemical properties. The physical properties include the form of the particles, the particle size and particle size distribution, the porosity of the material including the specific area and the pore size distribution. The chemical properties are a function of silanol groups and the water content of the material.

Preferably, a silica composed of small particles is used, without exaggerating as extremely small particles-may lead to slow filtrations. The particles may have an average particle size of 1-1000 µm, depending on the requirements for the specific application. In case immobilised tannin is used as a stationary phase for high pressure chromatography, particle size preferably is 4- 20 µm. On the other hand, the use of larger particles may be necessary when a quick filtration is a requisite, such as in the removal of metals and proteins by complexation and filtration.

The specific area of silica preferably varies between 100 and 1500 m²/g. The physical characteristics are measured with the state of the art techniques. The particle size distribution is measured with laser diffraction techniques, the specific area is measured with N₂-BET, the pore size distribution is measured with Hg-porosimetry, SEM microscopy is used to view the external form and the homogeneity of the material.

The chemical behaviour of silica largely depends on the amount of free silanols in the material. Preferably, a silica with a large number of silanol groups is used. This is checked by IR and solid state NMR. The water content of the silica is controlled.

A pre-treatment of silica may be useful. The particle size or particle size distribution may be adjusted by sieving. The amount of silanol groups may be increased by an acidic aqueous treatment of the silica, or decreased by a thermal treatment to obtain the desired amount of silanol groups. A dehydration step without affecting the silanol groups may also be necessary for good clean reactions.

Other inorganic oxides, such as alumina, titanium oxides, zirconium oxides, silica aluminates, aluminosilicates, clays, acid-treated clays, alkaline earth silicates, may also be used as carrier material.

The inorganic oxide may also be functionalised, containing a reactive group for the coupling with tannin. More specifically, the functionalised inorganic oxide is silica that may be silica functionalised for use as a scavenger reagent in combinatorial synthesis, with an alkyl group ending in an epoxide, an isocyanate, a halogenide, an acid chloride, a sulfonyl chloride or a silylhydride group or a vinyl group. The reactive group may be separated from the silica by an alkyl or ether chain composed of 1 to 5 carbons. In this case, the functionalised silica must be considered to be BB-SP** in formula 1, which is reacted with tannin.

The spacer molecule may also be reacted with the monomer of the inorganic oxide. More specific, alkoxysilanes, alkoxytitanates, aluminium alkoxides, silicium chlorides, aluminium chlorides and titanium chlorides or mixtures of these monomers, used for the synthesis of the inorganic oxides defined above may be applied. More specific, tetraethoxysilane is most commonly used for the synthesis of silica. Cyclic siloxanes, titanates or aluminates such as octamethyltetrasiloxane may also be used as a monomer. Oligomers of the inorganic oxides may also be used , e.g. silica colloid suspensions or sol gels.

The spacer molecule may also react with silicium-containing polymers, or may also be part of commercially available polymers. The polymers may be silicone polymers containing reactive silicium groups that can react with the spacer molecules described above or with SP*-Tan.

More specifically, the silicone polymer possesses the structure of Formula III. 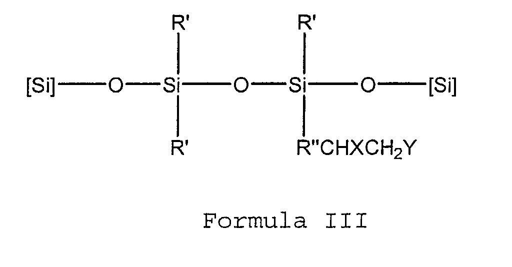 wherein R and R' are alkyl or alkylcycloalkyl chains, each containing 1-10 carbon atoms, preferably methyl, R'' is an alkyl or alkylcycloalkyl chain containing 1-10 carbon atoms or an ether containing 2-9 carbon atoms around oxygen. Preferably, the alkyl chain is a propyl group or a propyloxymethylene group and [Si] represents the polymeric backbone.

The preparation may either start with the coupling of silica with a spacer molecule, or with the coupling of tannin with a spacer molecule, or may be a one pot system.

The amount of tannin used must be at least 1 weight/weight percent, preferably 3 to 50 weight percent with respect to the final material, and in case no polymeric material is used, up to 90 w/w % tannin.

The amount of the spacer molecule used may vary between approximately 1.5 and 6.0 mole equivalents calculated from the average molecular weight of the tannin, more preferably between 2.0 and 5.0 equivalents. For food applications, the immobilised tannin will be prepared in aqueous medium.

A summary of the synthetic approach is given in the scheme below. 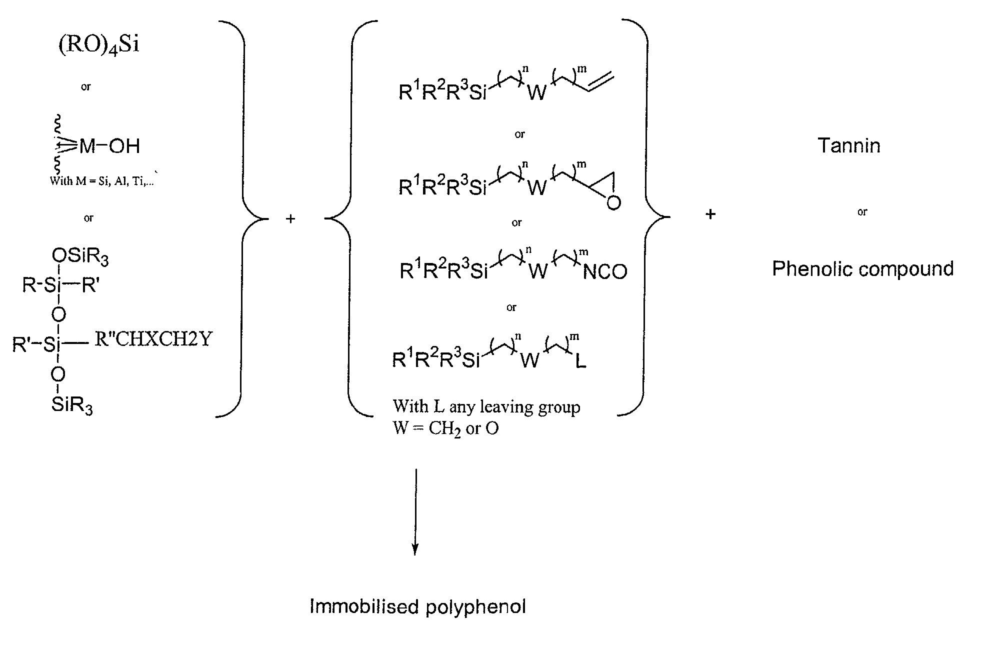 where n + m = 0 to 9 carbon atoms, either part of an ether, an alkyl or an alkylcycloalkyl group
where W = O or CH₂

Synthesis of immobilised tannin using a spacer molecule ending with a leaving group, such as a halogenide, an epoxide, a sulfonic ester, or a hydride, is described hereafter.

A first synthetic way comprises the production of an intermediate by the reaction of tannin with spacer. This reaction is preferably executed in aqueous medium, in alcohols, ketones or mixtures thereof, at a pH varying from 7 to 12, preferably 8-9.5, and at a temperature of 0-100°C, preferably 20-60°C. An inorganic or organic base is used to set the pH of the mixture, preferably a metal hydroxide such as NaOH, NaHCO₃, or Na₂CO₃, ammonia, or triethylamine and the like. The reaction is controlled via HPLC-analysis, and may take from 15 minutes to 24 hours depending on temperature and pH. The solution of the tannin-spacer obtained by the process, may be used as such or purified. It may also be spray dried or freeze dried to a solid for further use.

Purification of SP*-Tan thus produced may be achieved by membrane separation of low molecular weight compounds, by distillation of volatiles, by extraction or precipitation of the material, by slurrying in organic solvent.

The SP*-Tan may then be coupled with an inorganic oxide by mixing e.g. silica with tannin-spacer in water, aqueous medium, alcohols or ketones, or mixtures thereof. The mixture is subsequently acidified to pH 1-7, preferably to pH 2-5, and reacted at 0-100°C, preferably 20-40°C. The mixture is stirred for 1 to 24 hours until completion of the reaction. Acids used include mineral acids such as hydrochloric acid or organic acids such as formic or acetic acid.

The SP*-Tan may also be combined with monomer of an inorganic oxide, such as tetraethyl orthosilicate, aluminium triethoxide or titanium (IV) isopropoxide. In this case, SP*-Tan and monomer are mixed in a solvent such as water, aqueous mixtures, a ketone or an alcohol, or mixtures thereof. The polymerisation is effected either by acidic or by basic catalysis. Acid catalysts can be any protic acid, such as HCl. Basic catalysis can be effected by ammonia or by ammonia buffered with ammonium salts or by organic amines such as triethylamine. This technique, called sol gel polymerisation, affords to influence the structure of the material obtained by changing the reaction conditions. In this way, modifications in physical and chemical properties of the material can be achieved. Additionally, surfactants may be added to influence the physical structure of the final material.

The SP*-Tan in water may also serve as the monomer. In this case, the mixture is acidified to pH 1-7, at 0-100°C, preferably 20-40°C, and stirred for 1-24 hours until completion of the polymerisation. The R¹R²R³-silicium group reacts into a polymeric backbone on which the tannin is attached.

In another approach, spacer is reacted first with the inorganic oxide. The reaction may be performed in aqueous as well as in organic medium. The coupling may be effected either by thermal condensation in solvent, or the coupling may be effected as above by acidification of the mixture.

The thermal condensation can be performed in any organic solvent, but preferably uses a solvent showing azeotropic behaviour with water, such as toluene, xylene or alkanes. The mixture is then refluxed with distillation of solvent, water and the alcohol formed in the reaction. A water separator may be used to remove the water formed. The reaction is carried out for 1 to 24 hours, and can be followed by the amount of alcohol distilled during the reaction.

The reaction of the inorganic oxide with the spacer in aqueous medium or in polar solvents such as alcohols or ketones is carried out at pH 1-7, at 0-100°C, preferably 20-60 °C for 1 to 24 hours. The spacer may be added to an acidic suspension of silica, or acid is added to a suspension containing silica and spacer.

After the formation of inorganic oxide-spacer reaction product, the material is collected by filtration and washings. It may be used as such in the following step, or it may be dried in a vacuum oven at 20-100°C.

Said inorganic oxide-spacer reaction product is then suspended in aqueous medium or in a polar solvent such as an alcohol or a ketone or a combination of the above. Tannin is subsequently added, and the pH is adjusted to 7-12, preferably to 8-9.5, and the reaction mixture is heated to 20-100°C, preferably to 20-60°C. The reaction mixture is stirred until no more tannin is immobilised or until a satisfying amount of tannin is immobilised.

The pH can be adjusted to 7-12 using a range of bases, such as ammonia, metal hydroxide, carbonates, organic bases either dissolved in water, or in a pure form. Preferred is sodium hydroxide.

Another sol-gel approach is to polymerise the spacer molecule with the inorganic oxide monomer, and then coupling of tannin onto the formed polymer. In this way, a variant of a functionalised silica gel may be obtained.

The spacer molecules do not necessarily end with a leaving group, but may end with an unsaturated group, such as an isocyanate or an alkene or conjugated alkene, and can serve as acceptor for a phenolate anion.

In case isocyanates are used, the reaction mixture has to be low in water content, and should be driven in aprotic solvents and without excess of base. All sequences of reacting tannin, spacer and polymeric backbone (carrier) that are described above are applicable to isocyanate group containing spacers.

The addition of phenolates to unsaturated double bonds may be effected both by acidic and basic catalysis. Acid catalysis may be effected using Lewis acids, mineral acids and sulfonic acids. Basic catalysis may only lead to reaction when activated alkenes are used, e.g. alkenes conjugated with carbonyl derivatives.

In general, the reaction may be performed under inert nitrogen atmosphere. Prior to isolation, the structure of the immobilised tannin may be modified by adding an inorganic or organic acid or base, to a pH suitable for the specific application. The product is then collected by filtration or centrifugation and washings.

Some chemicals may be added to improve the quality of the final product, such as antioxidants, more specific bisulphite, dithionite, nitrite, phosphite, hypophosphite and their derivatives or ascorbic acid, or reducing agents such as sodium borohydride.

Filtration of the final material should be relatively fast, as this parameter is essential for the future use of the product. Indeed, the materials prepared show a good filtration speed.

Purification of the product may be achieved by reslurrying in aqueous solution or in polar solvents such as alcohols or ketones, or by distillation of volatiles. This purification may remove residual spacer, tannin, salts or solvents.

The product is finally dried in a vacuum oven at 20-100°C.

The analysis of the product is performed by a variation of techniques. The characterisation was performed by FT-IR, ¹H-MAS-NMR, ¹³C and ²⁹Si MAS-NMR, TGA-DTA, SEM, BET porosity measurements and particle size distribution measurements. Typical results are described in the examples.

Further analyses include inorganic ash, KF, residual solvent, residual tannin measurement.

The immobilised tannin prepared as described may be used as such, as a gel, as a spray-dried product or in formulations or as composite materials with other compounds depending on the properties required.

The product may be used for the known applications of tannin. Most applications are based on the capacity of tannin to complexate proteins or metals.

The first group of applications for immobilised tannin is the uptake and removal of proteins. In the case of beer stabilisation by immobilised tannins, proteins and yeast residues are removed to obtain a clarified beer without using large quantities of filter aid. This is an advantage over the classical beer clarifications with tannin itself. Moreover, immobilised tannins may be applied in a column or in another continuous mode or may be recovered. A major advantage is the absence of tannin residues in the beverage.

The activity in beer is checked via a Chapon test. In this test, beer is treated with immobilised tannin, filtered, alcohol is added, and the turbidity is measured after cooling at -5°C for 1 hour.

Immobilised tannin may also be used for treatment of other beverages, such as wine, sake, port, fruit juices, lemonades.

Immobilised tannin may also be used in the purification of proteins, as there is selectivity depending on the composition and the molecular weight of the protein. The complex formation with proteins may lead to applications in the chromatographic field. Proteins may also be immobilised on immobilised tannin.

The protein activity is checked by treating a standard enzyme solution with immobilised tannin, followed by measurement of the residual amount of enzyme in the supernatant.

Immobilised tannin can also be applied to complexate and remove metal ions from any solution, such as waste water, water containing precious metals, water containing heavy metals, chemical reaction mixtures, radioactive waste water, organic solvents or organic mixtures containing metals.

To demonstrate the applicability of the material, a test was developed in which standard solutions of Fe(III) are treated with immobilised tannin. As in the protein test, the material shows economically interesting adsorption characteristics.

The insoluble products and/or the particulate spacer-tannin may also be applied to burns, to improve crust formation and to avoid infections. These antibiotic properties of tannin may also be used to avoid unwanted bacterial growth onto solid material exposed to air.

Application of SP*-Tan as such onto a target material is also possible. In this approach, a solution of SP*-Tan is contacted with a support that has to be treated with tannin. The mixture is then acidified, and the SP*-Tan polymerises around the material to form a polymeric coating. This material may be textile or textile fibres, which benefit from a tannin treatment to enhance the colour fastness, wash fastness or anti-staining properties of the textile. The system has the advantage over the classical tannin treatments that there is no leaching of the tannin when the textile is washed, thus the original activity remains fully present, also after repeated washing. Metallic surfaces may also be treated this way to avoid oxidation. A pre-treatment such as etching may be required to activate the surface.

SP*-Tan may also be complexated with dyestuffs. The resulting complex composed of SP*-Tan and the dye may then be used as an ink component for application onto textile, paper or any material to be dyed or printed. After applying the complex onto the material, polymerisation of the adsorbed SP*-Tan-dye complex may be effected by acidification or by heating the material. In this way, the dye is immobilised both by complexation and by inclusion into the polymer matrix, leading to improved wash fastness and water fastness.

SP*-Tan is a very strong antioxidant and an effective radical scavenger. Silica and titanium oxide are used as fillers in a variety of products such as paints, textiles and polymers. The antioxidant and radical scavenging properties of tannin may be applied by immobilising SP*-Tan onto these fillers, such as silica, titanium oxide, zirconium oxide or other inorganic oxides. These immobilised tannins may be used in paints to avoid colour shifting, and thus to increase their stability; in textiles as protection against ageing or against chlorine contact in swimming pools.

### Description of preferred embodiments of the invention

### Example 1 : Preparation of SP*-Tan

A reactor is charged with 107 g Brewtan® and 500 ml water. The solution is treated with NaOH 30% to a pH of 9.50. A total of 78.5 g of base solution is added. The solution is then heated to 60°C. At 60°C, 107 g glycidoxypropyltrimethoxysilane is added over a period of 25 minutes. The mixture is stirred at 60°C for 2 hours and slowly cooled to ambient temperature. The solution is spray dried yielding a nice, brown powder.

### Example 2: Preparation of SP*-silica

200 g silica (Daraclar 7500) is suspended in 1000 ml toluene, and 100 ml glycidoxypropyltrimethoxysilane is added. The suspension is heated to toluene reflux, and the reaction is carried out at reflux temperature over night, with partial distillation of the solvent mixture. The reaction mixture is then cooled to ambient temperature, and the formed product is filtered and washed with 125 ml toluene. The product is subsequently dried in the vacuum oven at 60°C over night to yield 225.5 g of nicely crystalline, white product.

### Example 3 : Immobilisation of gallic acid

SP*-silica, as prepared in Example 2 was suspended in water with 14 g of gallic acid. The mixture was brought to pH 9.5 with NaOH 0.2 M, and reacted for 3 hours at 60°C. The resulting product was filtered over a pressure filter and washed with 10 x 50 ml of water. After drying, 37.6 g of a slightly brown product was obtained.

### Example 4: Immobilisation of tannin

14 g Brewtan® is dissolved in 250 ml demi water, and treated with NaOH 1 M to a pH of 9.5. Subsequently, 40 g of the product as prepared in Example 2 is then added, and the suspension is heated to 60°C for 3 hours. After cooling, the product is collected on a pressure filter and washed with 10 times 100 ml demi water. This yields 39.7 g of slightly brown product.

### Example 5

Idem example 3 but the reaction between Brewtan® and SP*-silica was carried out at 30°C for 24 hours.

### Example 6

A reactor is charged with 30 g Brewtan® and 540 ml water. The solution is treated with NaOH 30% until a pH of 9.50. A total of 20.5 g of base solution is added. The solution is then heated to 60°C. At 60°C, 30 g glycidoxypropyltrimethoxysilane is added over a period of 15 minutes. The mixture is stirred at 60°C for 2 hours and slowly cooled to ambient temperature. 90 g Silicagel Daraclar 7500 is then added to the solution, and a solution of 10 % acetic acid is added to pH 5.0 and the reaction mixture is shortly heated to 60°C. The reaction mixture is then stirred at ambient temperature over night, and filtered and washed with 500 ml water. After drying in a vacuum oven at 60°C for one night, 121.1 g product is obtained.

### Example 7 : TEOS + SP*-Tan polymerisation

SP*-tannin as prepared in Example 1 (Scale: 4.00 g Brewtan® and 4.02 g Dynasylan Glymo reacted in basic water) is added onto 37.4 g TEOS under nitrogen flow. This mixture is then further diluted with water (13 ml), and acetic acid 100 % is added to pH 3.79. The acidic mixture is then stirred at room temperature for 1 hour and the solid product is isolated by centrifugation and washed with water. After lyophilisation, 3.91 g of dry matter is obtained.

### Example 8:

50 ml water acidified with 1 ml acetic acid 100 % is stirred at ambient temperature. 50 g of a 20 % solution of spacer-tannin prepared as in example 1, dissolved in water, is slowly added to the water over a period of 40 minutes. The pH is controlled between pH 2.0 and 4.0 by the simultaneous addition of 3 extra ml of acetic acid. The obtained suspension is then stirred at ambient temperature for 16 hours, filtered and washed with 2 x 50 ml water. The product is oven-dried at 60°C in vacuum to obtain 7,22 g of product.

### Example 9 : One pot system

30 g of SiO₂ for flash chromatography (Merck 40-63 µm, 60 Å) and 10.00 g Brewtan® was suspended in 120 ml deionized water and inertised. The pH was increased to 9.0, and the suspension was heated to 40°C. 5 ml of Dynasylan Glymo was subsequently added onto the mixture over 30 minutes, and the reaction was stirred for 5 hours. Afterwards, the pH was adjusted to 5 with a 10 % AcOH solution. The reaction was stirred at 20°C over night. The product was collected by filtration, washed with water and oven dried to afford 42 g of material.

### Example 10: Condensed tannin

A solution of 20.0 g Quebracho tannin was treated with NaOH 30% to a pH of 9.2. and 20.00 g glycidoxypropyltrimethoxysilane was added to this solution at 43°C over a period of 15 minutes. The solution was then stirred for 4 hours, and subsequently added onto a suspension of silica Daraclar 7500 in 240 ml water and 20 ml acetic acid 100 %. The suspension is then stirred over night, filtered and washed with 500 ml of water. After drying to constant weight, 10.65 g immobilised, condensed tannin is obtained.

### Example 11

1.4 gram Brewtan® is dissolved in 25 ml of water and the pH is adjusted to 9.5 with NaOH 0.2 M. 3.00 g Dynasylan Glymo is then added to the solution, and the mixture is heated at 60°C for 3 hours. After cooling to room temperature, the mixture is then acidified with 10 ml of acetate buffer to pH 5.1 and Sipernat 500 LS is added. The suspension is subsequently heated at 100 °C for 1 hour, cooled, filtered and washed with water. Drying of the product is performed by lyophilisation. 6.73 g of material is obtained.

### Example 12 : Enzyme activity test

Schematically, the albumine test can be drawn as:

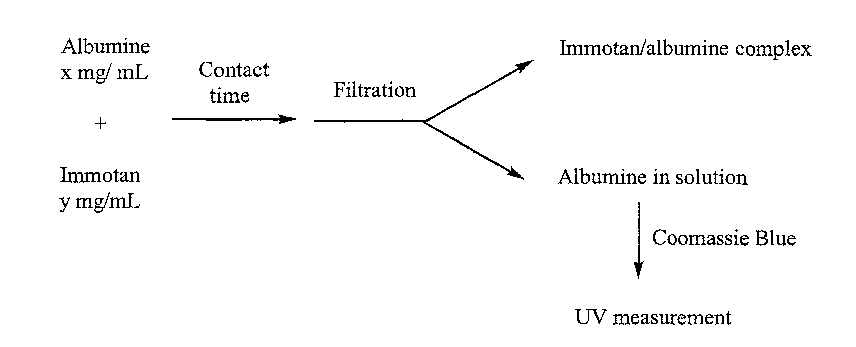

The immobilised tannin is weighed to obtain an estimated 10 mg tannin equivalent based on TGA data. This polymer is swollen in buffer solution at pH 3.5 for 1 hour. 10 ml of 0.2 wt.% Bovine Serum Albumine (BSA) is then added, and the suspension is stirred for 1 hour at room temperature. The suspension is then centrifugated, and the supernatant is then quantified after combination with Coomassie blue. Some results are described in the Table I below.

**Table I**

| Sample | Synthesis as in example | mg Sample | Adsorption time (h.) | Adsorption capacity (1) |
|---|---|---|---|---|
| IMMOTAN 1/4 | 4 | 100.3 | 0.5 | 520 |
| TAN 31 | 6 with gallic acid | 200.4 | 0.5 | 1000 |
| TAN 41 | 7 | 92.6 | 0.5 | 480 |
| TAN 35I | 8 | 31.3 | 0.5 | 170 |
| IMMOTAN 2/14 | 11 | 71.4 | 0.5 | 450 |
| TAN 52 | 12 | 85.1 | 0.5 | 990 |
| TAN 61 | 6 | 80 | 1.5 | 900 |
| TAN 61 | 6 | 80 | 16 | 1990 |
| TAN 62 | 6 | 75.5 | 0.5 | 1100 |
| TAN 62 | 6 | 75.5 | 16 | 2000 |
| Chibata (4) | pH = 4 | | 0.15 | 120 |

(1) Adsorption capacity = mg BSA adsorbed after 30 minutes contact time per 1 gram of polyphenol present present on the carrier.
(2) We can conclude that the polyphenol immobilised complexates its weight of enzyme after a short period of stirring, and the double of its weight at saturation. This proves both that the tannin is still active and that a massive activity is retained.
(3) Hydrolysable tannin, condensed tannin and gallic acid all lead to highly active product.
(4) According to Chibata et al., in Enzyme Microb. Technol., 8, 130-137 (1986), their polymer as described in the prior art, takes much less enzyme per immobilised tannin weight than ours.

### Example 13 : Chapon test on Beer stabilisation

This test, also known as cold alcohol test, is based on the precipitation of proteins with EtOH. This is the same action as for polyphenols. In this test, beer is treated with tannin or immobilised tannin and filtered. 100 g filtrate is then mixed with 8.0 ml ethanol (96% v/v) and cooled for 60 min at -5°C. Measurement of the turbidity after 60 minutes affords a figure directly related to the protein content of the treated beer.

To assess the effect of Immotan on *beer, 40* g/hL Immotan is compared with 2 g/hL Brewtan.

### Example 14 : Fe-adsorption test

Immotan is weighed to obtain approximately 10 mg tannin equivalent and combined with 5 ml of buffer and a stirbar. The suspension is stirred for 1 hour. The suspension is then combined with 5 ml 50 ppm Fe(III) solution, stirred for exactly 0 minutes, and filtered over a 0.45 µm filter.

The resulting, clear solution is diluted with Milli Q water. 5 ml Of this solution is then combined with 3 drops of Merck Spectroquant Fe-test. Measurement after at least 15 minutes at 565 nm with the UV spectrophotometer in comparison to a blank composed by Milli Q water and 3 drops of reagent.

**Table II**

| Sample | Synthesis as in example | mg Sample | Adsorption time (h.) | Adsorption capacity (1) |
|---|---|---|---|---|
| IMMOTAN 1/4 | 4 | 100.2 | 0.5 | 35.4 |
| TAN 31 | *6, gallic acid* | *200.4* | 0.5 | 37.9 |
| TAN 62 | 6 | 75.7 | 0.5 | 45.9 |
| TAN 41 | 7 | 92.6 | 0.5 | 40.2 |
| TAN 35I | 8 | 31.2 | 0.5 | 13.2 |
| IMMOTAN 2/14 | 11 | 71.1 | 0.5 | 25.6 |
| TAN 52 | 12 | 85.1 | 0.5 | 44.5 |

(1) The adsorption capacity is the number of mg Fe adsorbed by 1 gram of tannin immobilised.
(2) The most active samples take 2 moles Fe(III) per mole tannin immobilised. We can again say that the activity of tannin is nicely retained, and that all the above mentioned synthetic procedures render active product for the complexation of metals.

## Claims

1. A particulate insoluble product containing a polyphenol such as tannin immobilised by means of a bifunctional spacer, of which one functionality covalently reacts with said polyphenol, and the other functionality is a silicium based group which covalently binds to form a polymeric backbone

2. A product according to claim 1, wherein the silicium based group is reacted with inorganic oxides such as silica, or with a silicone polymer, or takes part in sol gel polymerisation.

3. A product according to claim 1 or 2 of the formula :
BB - SP - Tan Formula I
wherein:
- BB is a polymeric backbone that is an insoluble species,
- Tan is the rest of a tannin bound by one of its hydroxyl group to SP, and
- SP is a group derived from a bifunctional spacer molecule corresponding to the following general formula II 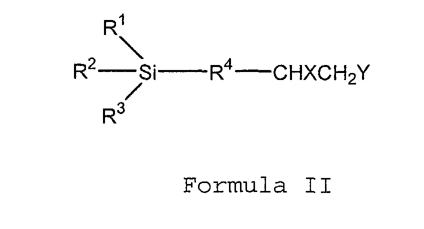
wherein
- R¹, R² are identical or different and represent an alkyl group with 1-8 carbon atoms, preferably methyl, ethyl or isopropyl, an aryl group, an alkoxy group with 1-8 carbon atoms, preferably methoxy, ethoxy or isopropoxy, or an aryloxy group or an halogen;
- R³ is a hydrogen, an alkyl group with 1-8 carbon atoms, preferably methyl, ethyl or isopropyl, an aryl group, an alkoxy group with 1-8 carbon atoms alignment, preferably methoxy, ethoxy or isopropoxy, an aryloxy group or a halogen.
- R⁴ is an alkyl chain or an alkylcycloalkyl chain containing 1-10 carbon atoms, or an ether chain containing 2-9 carbon atoms around the oxygen, and
- CHXCH₂Y is any group that can react with the phenolic group of the tannin, and preferably may be a vinyl group with X,Y = carbon-carbon double bond, an epoxide with X,Y = O, or X and/or Y can be a leaving group such as a halogenide, a sulfonyl ester such as a mesylate or a tosylate, or it can be an isocyanate.

4. A product according to any of the claims 1 to 3, wherein Tan is an aromatic species with at least two aromatic hydroxyl groups.

5. A product according to claim 4, wherein said aromatic species with at least two aromatic hydroxyl groups include rests of gallic acid, ellagic acid, pyrogallol, catechol, resorcinol, hydroquinone and derivatives thereof.

6. A product according to claim 4, wherein Tan is a hydrolysable tannin rest composed of a central nucleus such as glucose or quinic acid esterified with a number of gallic acids or ellagic acids.

7. A product according to claim 4, wherein Tan is a condensed tannin as isolated from natural products or as synthetically prepared categorised under the flavonoids, the flavanols or the stilbene derivatives.

8. A product according to any of the claims 4 to 7, wherein the R¹R²R³-silicium group in the formula II is trimethoxysilyl or triethoxysilyl group, a dimethyl-silylhydride or a dimethylsilylchloride.

9. A product according to any of the claims 4 to 8, wherein the spacer molecule is glycidoxypropyltrimethoxysilane or glycidoxypropyltriethoxysilane.

10. An intermediate product useful for the preparation of the product of anyone of claims 1 to 9 of the formula
SP* - Tan Formula IV
wherein :
- SP* is a monofunctional group derived from the bifunctional spacer molecule of formula II.

11. A process for obtaining a product according to formula I of claim 3, wherein a product according to formula IV of claim 10 is polymerised either on itself or with the addition of an extra compound.

12. A process for obtaining a product according to formula I of claim 3, wherein a product according to formula IV of claim 10 is polymerised by alkoxysilicatic polymerisation such as in sol gel chemistry.

13. A process according to claim 11, wherein the polymeric material used to couple with SP*-Tan is an inorganic oxide, preferably silica.

14. A process according to claim 11, wherein the polymeric material used to couple with spacer-tannin is a polymeric containing reactive silanol groups.

15. A process according to claim 11, wherein the polymeric material used to couple with spacer-tannin is a silicium-based scavenging reagent.

16. A process to obtain a product according to formula I of claim 3, wherein a polymeric material is first reacted with a spacer of formula II of claim 3, which is then reacted with a tannin.

17. Use of the immobilised polyphenol according to any of the claims 1 to 9 or obtained by the process of any of the claims 11 to 16 in the complexation of metal or proteins.

18. Use according to claim 17 for the removal of proteins and metals by a filtration, in order to avoid residues in the treated solutions, preferably with recycling of the said immobilised product, possibly after the regeneration thereof.

19. Use according to claim 17 or 18, for applications such as clarification and stabilisation of beverages, treatment of textiles, removal of metals from solutions, separation and purification of proteins.

20. Use of the immobilised polyphenol according to any of the claims 1 to 10 or obtained by the process of any of the claims 11 to 16 as a radical scavenger, an antibacterial or an antioxidant.
